# EUROPEAN PATENT SPECIFICATION

(11) **EP 2 854 522 B1**
(45) Date of publication and mention of the grant of the patent: **25.12.2019**
(21) Application number: 13796826.9
(22) Date of filing: 28.05.2013
(51) Int. Cl.: A01K 61/54

(54) **METHOD OF AND SUPPORT FOR GROWING SHELLFISH**
VERFAHREN UND TRÄGER ZUR ZÜCHTUNG VON SCHALENTIEREN
PROCÉDÉ ET SUPPORT D'ÉLEVAGE DE COQUILLAGES

(30) Priority: 29.05.2012 NZ 60031112
(43) Date of publication of application: 08.04.2015
(73) Proprietor: Aqua Mould Systems NZ Limited, Kerikeri, Northland 0230 (NZ)
(72) Inventor: GREGORY, Shaun, Kaeo 0479 (NZ)
(74) Representative: Jones, Graham Henry
(86) International application number: PCT/NZ2013/000089
(87) International publication number: WO 2013/180578

(56) References cited:
- WO-A1-02/085108
- AU-A- 3 173 284
- AU-A- 4 762 085
- FR-A1- 2 959 394
- US-A- 3 294 062
- US-A- 4 317 429
- US-A- 5 579 724
- US-A1- 2010 294 203
- US-B2- 7 552 700
- OGBURN, D ET AL.: 'Waterproof Labelling and Identification Systems Suitable for Shellfish and Other Seafood and Aquaculture Products. Whose Oyster is That?' NSW FISHERIES FINAL REPORT SERIES NO. 17 no. 17, September 1999, page 10, XP055172973 Retrieved from the Internet: <URL:http://frdc.com.au/research/Documents/ Final_reports/1998-360-DLD.pdf> [retrieved on 2013-08-06]

## Description

### FIELD OF INVENTION

This invention relates to a method of growing shellfish, for example oysters.

### BACKGROUND

It is known to grow oysters using ropes, racks or baskets. Equipment and oysters can be damaged by exposure to the elements when using existing methods of growing oysters in the ocean. It is accordingly an object of a preferred form of the invention to go at least some way towards addressing this problem or to at least provide the public with a useful choice.

FR 2959394 A discloses a method of growing shellfish in recesses. Also disclosed is the use of raised part to create a deliberately formed mark on the shellfish as the shellfish grows.

US 4 317 429 A discloses a plastic rearing panel comprising a moulded plastic panel having a plurality of recesses for rearing shellfish from juvenile to adult size. The recesses in the panels are covered by removable mesh to contain and protect the shellfish and to afford at the same time opportunities for feeding on waterborne sources of nutrition.

The term "comprising" and derivatives thereof, eg "comprises", if and when used herein in relation to a combination of features should not be taken as excluding the possibility that the combination may have further unspecified features. For example, a statement that an arrangement "comprises" certain parts does not mean that it cannot also, optionally, have additional parts.

### SUMMARY OF INVENTION

According to one aspect of the invention and according to independent claim 1, there is provided a method of growing shellfish comprising the steps of:
a) taking a support having a plurality of recesses;
b) attaching shellfish spat to at least some of the recesses; and
c) placing the support in water such that the spat grow into substantially mature shellfish; and
d) the substantially mature shellfish are each generally in the shape of their respective recess (7); the method being characterised in that:
e) in each of at least some of the recesses (7) there is provided a raised part within the respective recess, said raised part being adapted to create a deliberately formed alphanumeric, written or pictorial mark on the shellfish as it grows.

Optionally the shellfish comprise oysters.

Optionally the oysters are removed from the support when they are substantially mature.

Optionally the support comprises a tray which has the recesses.

Optionally the recesses are arranged in rows.

Optionally the support has one or more channels running between at least some of the recesses.

Optionally each recess has at least one opening to the channel to allow air and water to enter and leave the recess by way of the channel.

Optionally the support has walls and corresponding spaces that enable the support to be stacked with other supports.

Optionally the mark comprises a symbol.

Optionally the attaching of shellfish spat is such that a shellfish spat is glued with its rear part at the edge of its recess nearest the channel and with its front part pointing to its recess so that the shellfish spat grows into its recess.

According to a further aspect of the invention there is provided a support for growing shellfish comprising the technical features of independent claim 12.

Optionally the support is a tray with walls and corresponding spaces that enable the tray to be stacked with other similar trays.

### BRIEF DESCRIPTION OF THE DRAWINGS

Some preferred forms of the invention will now be described by way of example and with reference to the accompanying drawings, of which:
- **Figure 1**: is a perspective view of an oyster growing tray;
- **Figure 2**: is a top perspective view of the tray;
- **Figure 3**: is a partial cross section view of the tray; and
- **Figure 4**: is a perspective view of the tray in use during processing.

### DETAILED DESCRIPTION

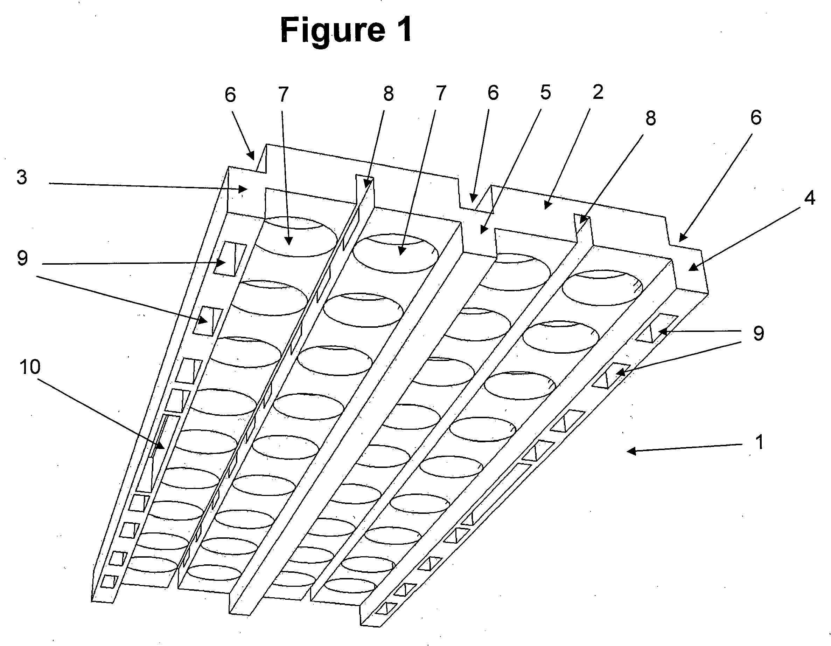

Referring to figure 1, a preferred embodiment of the invention comprises a tray 1 for use in growing oysters. The tray 1 has a body 2, outer walls 3, 4 and an inner wall 5. There are spaces 6 in the upper surface of the body 2 of the tray 1. The spaces 6 are complementary to the walls 3-5 and so enable the tray 1 to be stacked above or below other trays of the same design. The tray 1 is made from strong substantially inflexible plastic or other suitable material.

The tray is formed in two similar halves with the inner wall 5 running between each half. In each half there are two parallel rows of recesses 7. A channel 8 runs between the two rows of recesses 7 in each half of the tray 1. As can be seen clearly in figure 1, there are therefore in total four rows of recesses 7 and two channels 8 in the tray 1.

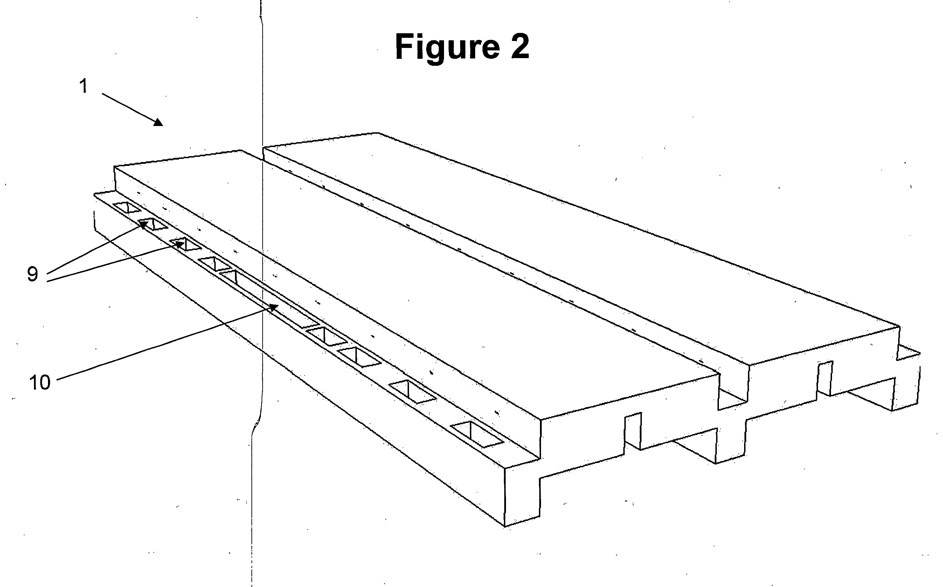

The outer walls 3, 4 have a number of peg apertures 9 for securing the tray 1 when in use, as described below. Each outer wall 3, 4 also has a handle aperture 10 to which a handle can be attached for securing the tray 1 when in use as an alternative to using pegs. Figure 2 illustrates the peg apertures 9 and handle aperture 10 on one outer wall 3 of the tray 1.

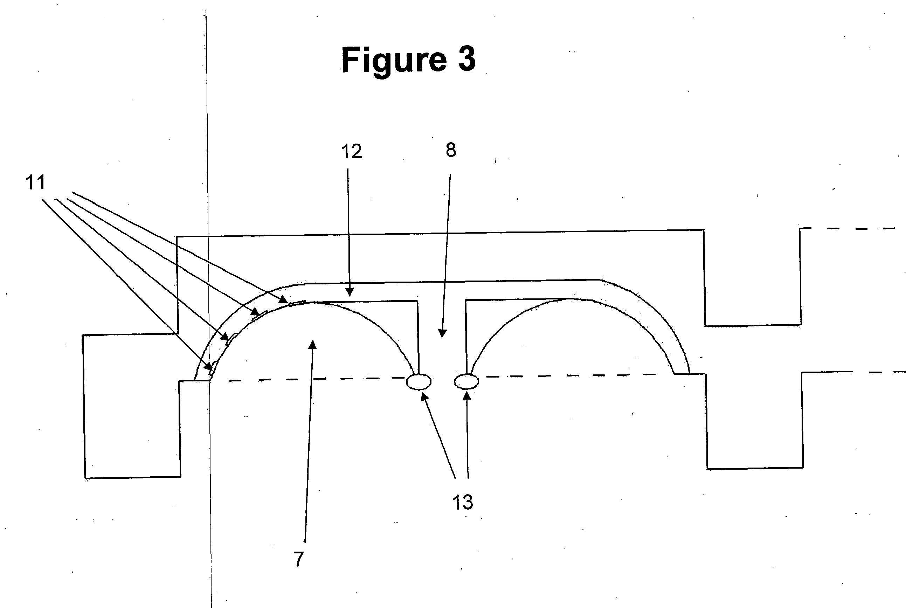

An oyster is grown in each recess 7 of the tray 1. As can be seen in figure 3, each recess 7 has a series of air holes 11 that connect the recess 7 to a conduit 12 that opens into the channel 8. When the tray 1 is in use to grow oysters, the first step is to glue an oyster spat 13 (e.g. a larva) to the edge of the recess 7 nearest the channel 8. The spat 13 may be bred or caught in the wild. The spat 13 will grow forward and so it is glued with its rear part at the edge of the recess with its front part pointing towards the recess 7 so that it grows into the recess. An ideal size for the spat 13 is approximately 2 cm long although larger or smaller spat can also be used. Over time the spat 13 will grow into and will eventually fill the space of the recess 7 to become a mature oyster. Once spat 13 has been glued at each recess 7 of the tray 1 the process is repeated with other trays until the desired number of trays is ready to be farmed. In an in-use growing disposition the trays are placed with the recesses 7 facing downward.

Oyster farming is traditionally carried out in one of a number of possible ways. Inter-tidal oyster farming may involve a series of horizontally-disposed ropes or wooden racks positioned in the ocean to which sticks, trays or bags are attached. The oyster spat 13 is glued directly to the sticks or placed loose in trays or bags. In inter-tidal farming the ropes or racks are positioned in a tidal area of the ocean. The sticks, trays or bags sit above the water at low tide and are under water at high tide. In sub-tidal oyster farming the oysters are attached to a rope in deeper water and remain entirely under water during their life cycle. The tray 1 of the present invention is suitable for use in existing oyster farming methods but in the preferred embodiment is used in inter-tidal oyster farming.

If the tray 1 is to be used with wooden racks then it is preferred to use one tray level. Alternatively several trays may be stacked and then secured to a rack with pegs by way of the peg apertures 9. In an alternative embodiment of the invention nails can be used rather than pegs to secure each tray 1. The nails are nailed into the horizontally-disposed wooden racks so the tray 1 can sit on top of the racks with the nails coming up through the peg apertures 9. The top of the nail then has a peg pushed on to stop the tray from moving or floating. When removing the trays the peg is lifted off the nail and the tray 1 is lifted off the rack.

The trays may also be hung from the racks. Where trays are hung purpose-built handles may be inserted in the handle apertures 10 and nylon may be attached to the handles at one end and at the other end to clips which fasten to the racks. Alternatively nylon may be attached directly to the peg apertures 9 or the handle apertures 10. This nylon/clip arrangement is also suitable for hanging trays from horizontally-disposed ropes in inter-tidal farming. In an alternative embodiment of the invention the trays 1 are attached to vertically-hanging ropes in sub-tidal oyster farming.

Once the spat 13 are glued to trays 1, and the trays 1 stacked and attached to racks or ropes the oysters are left in the ocean to mature. As the recesses 7 face downward, the walls 3-5 act to keep the body 2 of the bottom tray 1 above the wooden racks when used in a rack system. Oysters in the stacked trays above the bottom tray 1 will be protected by the tray beneath it and by the recesses 7 they are growing in.

Referring to figure 3, in the preferred embodiment the air holes 11 in each recess 7 allow water and air to pass in and out of the recess 7 by way of the conduit 12 to the channel 8 during normal tidal movement. Specifically, the air holes 11 allow air to be pushed out of the recess 7 at an upward angle by the rising tide. This ensures that there is no air in the recess 7 once the tide rises above the level of the recess so that the growing oyster is not out of the water longer than the low tide period.

As well as being protected within the recess 7, each oyster will tend to grow to substantially take the shape of the recess 7. This means that oysters farmed using the tray 1 of the invention will be approximately the same size and shape, reducing the need to grade mature oysters. Trays 1 can be made in different sizes to produce different sized oysters. Use of trays 1 with recesses 7 also means that it is possible to brand the shell of each oyster by having a raised word or shape in each recess 7. As the shell grows into the shape of the recess 7 the word or shape will be formed in the exterior of the shell as an indentation in the shell. Oysters can also be grown with a flat bottom allowing mature processed oysters to be free standing. When the shell has grown to the length and depth of the recess 7 it then continues to grow a thicker shell until it is ready to be processed.

Once the oysters have matured the trays 1 are removed from the water, stacked on pallets and taken to a factory to be processed. The oysters are within the recesses 7 and this reduces the need to clean the oysters themselves and facilitates efficient cleaning of the trays 1. Each tray 1 is unstacked and placed on a conveyor belt with the side containing the mature oysters in the recesses 7 facing upward. Any over-catch i.e. spat settling onto exposed areas of the tray 1, is removed by compressed air. The conveyor belt passes beneath an air-knife opening machine (not shown). The machine opens the oysters by having a vibrating air-knife penetrate through the shell. It then cuts the muscle of each oyster releasing the bond between the top half and the bottom half of each shell. This top half of each shell is then removed. The oyster is now exposed in the lower half of its shell. If the oysters have been in a chiller for a certain period of time the flesh and shell can stick leading to tears of the flesh when the shell is removed. In this situation a jet of air or water may be directed by way of a jet situated on the blade of the air-knife.

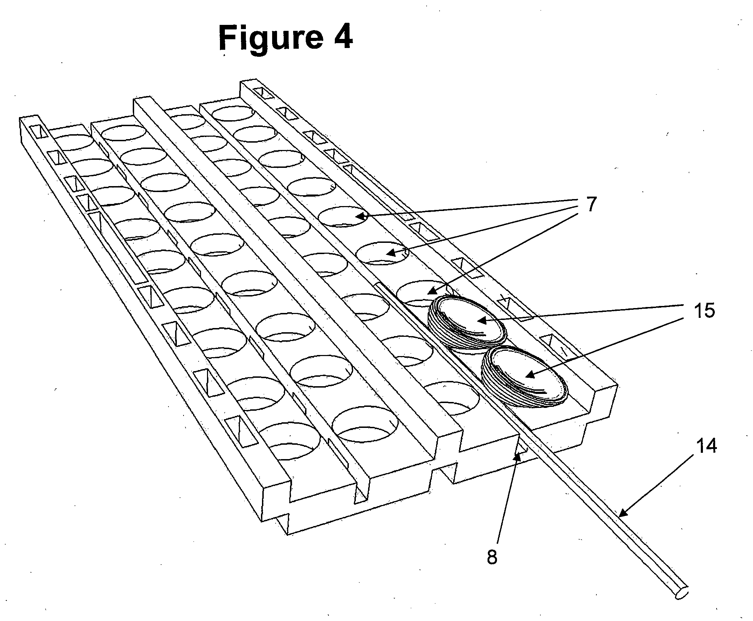

Referring to figure 4, further along the conveyor belt another machine directs a steel rod 14 through each channel 8 of each tray 1. As the steel rod moves through the channel 8 it contacts the rear end of a half-shelled oyster 15 and lifts the half-shelled oyster 15 out of the recess 7. Only one rod 14 and two half-shelled oysters 15 are shown in figure 4 but it should be appreciated that typically the tray 1 will contain half-shelled oysters 15 in all the recesses 7. The air holes 11 facilitate the lifting process by allowing air into the recess 7. The oysters are now removed from the tray 1 and packed into cartons ready for distribution. As the oysters grown using trays 1 are substantially the same size and shape as the recesses 7, the cartons can contain preformed dividers to hold oysters of that particular size and shape for convenient transport and to maximise use of space within the cartons.

While some preferred forms of the invention have been described by way of example it should be appreciated that modifications and improvements can occur without departing from the scope of the appended claims.

## Claims

1. A method of growing shellfish, which method comprises the steps of:
a) taking a support (1) having a plurality of recesses (7);
b) attaching shellfish spat (13) to at least some of the recesses (7); and
c) placing the support (1) in water such that the spat (13) grow into substantially mature shellfish;
and
d) the substantially mature shellfish are each generally in the shape of their respective recess (7); the method being **characterised in that**: e) in each of at least some of the recesses (7) there is provided a raised part within the respective recess, said raised part being adapted to create a deliberately formed alphanumeric, written or pictorial mark on the shellfish as it grows.

2. A method according to claim 1, wherein the shellfish comprise oysters.

3. A method according to claim 2, wherein the oysters are removed from the support (1) when they are substantially mature.

4. A method according to any one of the preceding claims, wherein the support (1) comprises a tray (1) which has the recesses (7).

5. A method according to any one of the preceding claims, wherein the recesses (7) are arranged in rows.

6. A method according to any one of the preceding claims, wherein the support (1) has one or more channels (8) running between the recesses (7).

7. A method according to claim 6, wherein each recess (7) has at least one opening (11) to the channel (8) to allow air and water to enter and leave the recess (7) by way of the channel (8).

8. A method according to any one of the preceding claims, wherein the support (1) has walls (3, 4, 5) and corresponding spaces (6) that enable the support (1) to be stacked with other supports.

9. A method according to any one of the preceding claims, wherein the mark comprises a symbol.

10. A method according to any one of the preceding claims in combination with at least claim 6 or 7, in which the attaching of shellfish spat (13) is such that a shellfish spat (13) is glued with its rear part at the edge of its recess (7) nearest the channel (8) and with its front part pointing to its recess (7) so that the shellfish spat (13) grows into its recess (7).

11. A support (1) for growing shellfish, which support (1) comprises a plurality of recesses (7) arranged in a series of parallel rows, and wherein:
a) in each of at least some of the recesses (7) there is provided a raised part within the respective recess, said raised part being adapted to create a deliberately formed alphanumeric, written or pictorial mark on the shellfish as it grows; and
b) each recess (7) has at least one opening (11) to a channel (8) provided in the support (1) and adapted to allow air and water to enter and leave the recess (7) when the support (1) is in use with shellfish growing.

12. A support according to claim 11, wherein the support (1) is a tray (1) with walls (3, 4, 5) and corresponding spaces (6) that enable the tray to be stacked with other similar trays.

13. A support according to claim 11 or claim 12, wherein the recesses (7) are arranged in rows.

## Patentansprüche

1. Verfahren zum Züchten von Schalentieren, wobei das Verfahren folgende Schritte umfasst:
a) Nehmen eines Trägers (1) mit einer Vielzahl von Vertiefungen (7);
b) Anbringen von Schalentierlaich (13) an mindestens einigen der Vertiefungen (7); und
c) Platzieren des Trägers (1) in Wasser, so dass der Laich (13) zu im Wesentlichen ausgewachsenen Schalentieren wachsen kann; und
d) die im Wesentlichen ausgewachsenen Schalentiere jeweils allgemein in Form ihrer jeweiligen Vertiefung (7) sind;
wobei das Verfahren **dadurch gekennzeichnet ist, dass**:
e) in jeder von mindestens einigen der Vertiefungen (7) ein erhöhtes Teil innerhalb der jeweiligen Vertiefung bereitgestellt wird, wobei das erhöhte Teil angepasst ist, um eine bewusst geformte alphanumerische, geschriebene oder bildliche Markierung auf dem Schalentier zu erzeugen, wenn dieses wächst.

2. Verfahren nach Anspruch 1, wobei die Schalentiere Austern umfassen.

3. Verfahren nach Anspruch 2, wobei die Austern von dem Träger (1) entfernt werden, wenn sie im Wesentlichen ausgewachsen sind.

4. Verfahren nach einem der vorhergehenden Ansprüche, wobei der Träger (1) eine Schale (1) umfasst, die die Vertiefungen (7) aufweist.

5. Verfahren nach einem der vorhergehenden Ansprüche, wobei die Vertiefungen (7) in Reihen angeordnet sind.

6. Verfahren nach einem der vorhergehenden Ansprüche, wobei der Träger (1) einen oder mehrere Kanäle (8) aufweist, die zwischen den Vertiefungen (7) verlaufen.

7. Verfahren nach Anspruch 6, wobei jede Vertiefung (7) mindestens eine Öffnung (11) zu dem Kanal (8) aufweist, damit Luft und Wasser mittels des Kanals (8) in die Vertiefung (7) eintreten und diese verlassen können.

8. Verfahren nach einem der vorhergehenden Ansprüche, wobei der Träger (1) Wände (3, 4, 5) und entsprechende Räume (6) aufweist, die ermöglichen, dass der Träger (1) mit anderen Trägern gestapelt werden kann.

9. Verfahren nach einem der vorhergehenden Ansprüche, wobei die Markierung ein Symbol umfasst.

10. Verfahren nach einem der vorhergehenden Ansprüche in Kombination mit mindestens Anspruch 6 oder 7, wobei das Anbringen des Schalentierlaichs (13) derart erfolgt, dass Schalentierlaich (13) mit seinem hinteren Teil an den Rand seiner Vertiefung (7), die dem Kanal (8) am nächsten liegt, und mit seinem vorderen Teil zu seiner Vertiefung (7) weisend geklebt wird, so dass der Schalentierlaich (13) in seine Vertiefung (7) hinein wächst.

11. Träger (1) zum Züchten von Schalentieren, wobei der Träger (1) eine Vielzahl von Vertiefungen (7) umfasst, die in einer Folge paralleler Reihen angeordnet sind, und wobei:
(a) in jeder von mindestens einigen der Vertiefungen (7) ein erhöhtes Teil innerhalb der jeweiligen Vertiefung bereitgestellt wird, wobei das erhöhte Teil angepasst ist, um eine bewusst geformte alphanumerische, geschriebene oder bildliche Markierung auf dem Schalentier zu erzeugen, wenn dieses wächst; und
(b) jede Vertiefung (7) mindestens eine Öffnung (11) zu einem Kanal (8) aufweist, der in dem Träger (1) bereitgestellt wird und angepasst ist, damit Luft und Wasser in die Vertiefung (7) eintreten und diese verlassen können, wenn der Träger (1) in Gebrauch ist, um Schalentiere zu züchten.

12. Träger nach Anspruch 11, wobei der Träger (1) eine Schale (1) mit wänden (3, 4, 5) und entsprechenden Räumen (6) ist, die ermöglichen, dass die Schale mit anderen ähnlichen Schalen gestapelt werden kann.

13. Träger nach Anspruch 11 oder Anspruch 12, wobei die Vertiefungen (7) in Reihen angeordnet sind.

## Revendications

1. Procédé d'élevage de coquillages, lequel procédé comprend les étapes consistant à :
a) prendre un support (1) ayant une pluralité d'encoches (7) ;
b) fixer un naissain de coquillage (13) à au moins certaines des encoches (7) ; et
c) placer le support (1) dans l'eau de telle sorte que le naissain (13) se transforme en coquillage sensiblement adulte ; et
d) les coquillages sensiblement adultes sont chacun généralement de la forme de leur encoche respective (7) ; le procédé étant **caractérisé en ce que** :
e) dans chacune d'au moins certaines des encoches (7) est prévue une partie surélevée à l'intérieur de l'encoche respective, ladite partie surélevée étant adaptée pour créer une marque alphanumérique, écrite ou picturale délibérément formée sur le coquillage lorsqu'il grandit.

2. Procédé selon la revendication 1, dans lequel les coquillages comprennent des huîtres.

3. Procédé selon la revendication 2, dans lequel les huîtres sont retirées du support (1) quand elles sont sensiblement adultes.

4. Procédé selon l'une quelconque des revendications précédentes, dans lequel le support (1) comprend un plateau (1) qui a les encoches (7).

5. Procédé selon l'une quelconque des revendications précédentes, dans lequel les encoches (7) sont disposées en rangées.

6. Procédé selon l'une quelconque des revendications précédentes, dans lequel le support (1) a un ou plusieurs canaux (8) courant entre les encoches (7).

7. Procédé selon la revendication 6, dans lequel chaque encoche (7) a au moins une ouverture (11) vers le canal (8) pour permettre à l'air et l'eau d'entrer dans et de quitter l'encoche (7) au moyen du canal (8).

8. Procédé selon l'une quelconque des revendications précédentes, dans lequel le support (1) a des parois (3, 4, 5) et des espaces correspondants (6) qui permettent d'empiler le support (1) avec d'autres supports.

9. Procédé selon l'une quelconque des revendications précédentes, dans lequel la marque comprend un symbole.

10. Procédé selon l'une quelconque des revendications précédentes en combinaison avec au moins la revendication 6 ou 7, dans lequel la fixation du naissain de coquillage (13) est telle qu'un naissain de coquillage (13) est collé avec sa partie arrière au bord de son encoche (7) au plus près du canal (8) et avec sa partie avant tournée vers son encoche (7) de telle sorte que le naissain de coquillage (13) grandit dans son encoche (7).

11. Support (1) destiné à élever des coquillages, lequel support (1) comprend une pluralité d'encoches (7) disposées en une série de rangées parallèles, et dans lequel :
a) dans chacune d'au moins certaines des encoches (7) est prévue une partie surélevée à l'intérieur de l'encoche respective, ladite partie surélevée étant adaptée pour créer une marque alphanumérique, écrite ou picturale délibérément formée sur le coquillage lorsqu'il grandit ; et
b) chaque encoche (7) a au moins une ouverture (11) vers un canal (8) ménagée dans le support (1) et adaptée pour permettre à l'air et l'eau d'entrer dans et de quitter l'encoche (7) quand le support (1) est utilisé pour l'élevage de coquillages.

12. Support selon la revendication 11, le support (1) étant un plateau (1) avec des parois (3, 4, 5) et des espaces correspondants (6) qui permettent d'empiler le plateau avec d'autres plateaux similaires.

13. Support selon la revendication 11 ou la revendication 12, dans lequel les encoches (7) sont disposées en rangées.
